# EUROPEAN PATENT APPLICATION

(11) **EP 4 575 887 A1**
(43) Date of publication of application: **25.06.2025**
(21) Application number: 23219007.4
(22) Date of filing: 21.12.2023
(51) Int. Cl.: G06K 1/12, G06K 19/06

(54) **METHOD OF FAST PRINTING GRAPHIC CODES AND CORRESPONDING PRINTING SYSTEM**

(71) Applicant: Dover Europe Sàrl, 1214 Vernier (CH)
(72) Inventor: Krolak, Adam, Plochocin (PL); Giemza, Maciej, Warszawa (PL); Wieczorek, Michal, Warszawa (PL)
(74) Representative: Rybarczyk, Dariusz Pawel

(57) **Abstract**

The present invention provides a method of fast printing graphic codes and a corresponding printing system. The method comprises determining a group of two or more different graphic codes of the same type, identifying fixed features being identical for all the graphic codes in the group and variable features being different between particular ones of the graphic codes, creating a partial pattern comprising the identified fixed features identical for all the graphic codes from the group, pre-printing the created partial patterns on a product and printing the remaining identified variable features corresponding to any of the graphic codes from the group on top of the pre-printed partial patterns in order to obtain a corresponding complete graphic code from the group.

## Description

The present invention relates to a method of printing graphic codes, and in particular to a method of fast printing graphic codes using pre-printed patterns. Furthermore, the present invention relates to a corresponding printing system for carrying out the mentioned method.

Graphic codes of different form are commonly used as a carrier of various types of information presented in a visual form. The most commonly used types of graphic codes include one-dimensional (1D) codes, such as bar codes, as well as two-dimensional (2D) codes, such as QR codes, however, many different variations of these basic types have been developed.

1D codes, such as bar codes also known as linear codes, are graphic codes in the form of parallel lines (bars) and spaces of varying widths between the lines. Depending on the widths of the bars and their arrangement within the code, they may represent a sequence of consecutive characters, e.g. binary-coded alpha-numerical characters. 1D codes can be easily read by commonly used optical scanners in order to retrieve the coded information in a fast and reliable manner.

2D codes, such as QR codes, are two-dimensional codes comprising dark and light areas arranged in accordance with a specific pattern that represents coded information which may be easily read and decoded by optical scanning. In case of the QR codes, information is usually coded in the form of black squares arranged in a square grid on a white background. Alternatively, this scheme can be also reversed, i.e. information can be coded using black or dark background and white or light squares. Some other forms of 2D codes are also possible, as long as the information/data coding pattern (made of any suitable shapes, such as squares, dots and the like) can be sufficiently distinguished against a contrasting background.

The QR codes are more and more popular as they are often used for quick and convenient retrieving information, such us URLs for websites, identification codes and others and can be read by any device equipped with a camera (such us smartphone) or other optical scanner.

The amount of information which can be coded by means of a single QR code has its limits and depends on the grid size and is also limited by additional parts of a QR code, such as position patterns, timing patters, alignment patterns, etc.

To enable the coding of the required content in a single QR code, for example between 40 and 80 characters, the code size would need to be 29x29, 33x33, or larger. The currently available laser systems or other printing technologies do not have the efficiency to print this size of codes with efficiency of 40000 prints per hour to 60000 prints per hour or more, and moreover, the industry is repeatedly asking for even higher speeds of 100 000 prints per hour.

The GS1 body is preparing a new approach to 2D codes (QR codes) including a new standard and digital link approach. With this changes, planned to go live in 2027, the 2D code will replace barcode marking on many products and will become even more popular. This will require fast 2D (QR code) printing on primary packaging.

Furthermore, from the producers' point of view, placing graphic codes on product packaging or other code carriers requires prior determination of the information that is to be encoded by a given graphic code (e.g. barcode or QR code). This may include information such as production batch, expiry date, web address with product information, however, this list is only exemplary and not exhaustive. For this reason, it is often difficult to plan the printing of graphic codes on packaging or other media in advance, which significantly delays the final printing process, especially in situations where it is required to prepare a given number of products with the appropriate graphic codes as quickly as possible. For these types of situations, it would be desirable to print graphic codes faster and more efficiently during the production process, at the packaging stage.

Taking into consideration the above, there is a need in the art for an improved method of printing graphic codes, including 1D and 2D codes, that would allow faster printing with higher efficiency.

The above-mentioned need is fulfilled by a method defined in independent claim 1 and a printing system defined in claim 15. Preferred variants of the method are defined in dependent claims.

The present invention provides a method of fast printing graphic codes, the method comprising:
- determining a group of two or more different graphic codes of the same type;
- identifying fixed features being identical for all the graphic codes in the group and variable features being different between particular ones of the graphic codes;
- creating a partial pattern comprising the identified fixed features identical for all the graphic codes from the group;
- pre-printing the created partial patterns on a product;
- printing the remaining identified variable features corresponding to any of the graphic codes from the group on top of the pre-printed partial patterns in order to obtain a corresponding complete graphic code from the group.

In one preferred implementation of the method, the graphic codes are selected from one-dimensional (1D) codes or two-dimensional (2D) codes.

In another preferred implementation of the method, the graphic codes are barcodes.

In still another preferred implementation of the method, each barcode in the group include a sequence of digits.

In still another preferred implementation of the method, the graphic codes are QR codes.

In still another preferred implementation of the method, each QR code in the group comprises one or more additional elements selected from: a logo, a numeric code, a character code, an alphanumeric code, a graphical element.

In still another preferred implementation of the method, the graphic codes are created using any colors against a contrasting background.

In still another preferred implementation of the method, the identified fixed features of QR codes are selected from a group comprising portions of function patterns and/or portions of an encoding region.

In still another preferred implementation of the method, the function patterns include one or more of position detection patterns, alignment patterns, timing patterns and the encoding region includes one or more of format information, version information and content field.

In still another preferred implementation of the method, the printing is performed using a laser printer and/or CIJ printer.

In still another preferred implementation of the method, the partial pattern is created using a selected subset of the identified fixed features.

In still another preferred implementation of the method, the printing the remaining identified variable features is performed dynamically using a first sensor detecting an edge of a moving product containing the pre-printed graphic code, and a second sensor detecting a first mark specially printed in a predetermined location on the product to indicate that the beginning of the pre-printed code is in a defined distance, thus allowing to start the printing in the correct time and to ensure proper alignment of the variable features with the fixed features on the product.

In still another preferred implementation of the method, the printing the remaining identified variable features is furthermore performed using a third sensor detecting a second mark specially printed in a predetermined location on the product, to indicate, based on the time difference between the detection of the first mark and the second mark, the speed of the movement of the product containing the pre-printed graphic code, allowing correct printing for variable speeds.

In still another preferred implementation of the method, the printing the remaining identified variable features is performed statically using a camera for recognizing the pre-printed pattern and triggering the printing of variable features to ensure proper alignment of the variable features with the fixed features on the product.

Furthermore, the present invention provides a printing system for carrying out the method as defined above, wherein the printing system comprises:
- a processing device for identifying fixed and variable features for a group of input graphic codes;
- a conveyor for transporting products which are to be subjected to printing;
- at least one printer adapted to print the identified fixed and/or variable features identified by the processing device on the products transported by the conveyor;
- at least one sensor positioned before the printer in the direction of the conveyor motion and configured to detect positions and/or speed of the transported products and to communicate the same to the printer to ensure proper alignment of the fixed and variable features on the products.

The present invention provides also a computer readable medium comprising computer program instructions which, when executed by a processing device, cause the processing device to carry out the steps of the above method.

Further features and advantages of the present invention will become apparent after reading a more detailed description presented below in connection with the attached drawing, in which
Fig. 1 shows a flowchart illustrating successive steps of a method of fast printing graphic codes according to the present invention.
Fig. 2A shows an exemplary group of six barcodes of the same type with identified fixed and variable features.
Fig. 2B shows a partial pattern created for the identified fixed features of the group of barcodes.
Fig. 3 shows a typical structure of an exemplary QR code;
Fig. 4A shows an exemplary group of ten QR codes of the same type with identified fixed and variable features.
Fig. 4B shows a partial pattern created for the identified fixed features of the group of QR codes.
Fig. 5 shows an exemplary group of five QR codes of the same type with identified fixed and variable features and a resulting partial pattern.
Fig. 6 shows a schematic diagram of a printing system adapted for carrying out the method according to the present invention.

### DETAILED DESCRIPTION

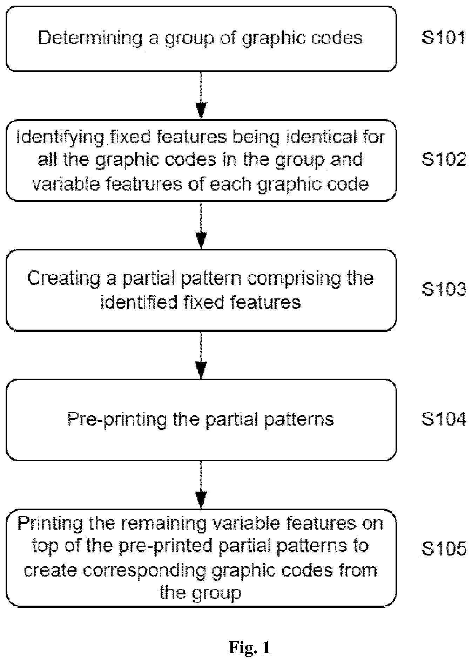

A flowchart illustrating successive steps of a method of fast printing graphic codes according to the present invention is schematically presented in Fig. 1. As explained earlier in this application, under the term "graphic codes" and within the context of the present invention, any types of 1D codes and 2D codes are to be understood which can be visually presented. Specific examples explaining how the method can be specifically used for barcodes and QR codes will be provided further below.

The method begins in step S101 in which a group of graphic codes is determined. Such a group may include two or more graphic codes of the same type and format so that the codes can be effectively processed (analyzed, compared, etc.). As an example, graphic codes in the group will be all QR codes of the same size and generated according to the same standard or method, barcodes generated according to the same standard and having the same number of characters coded therein, etc. For example, graphic codes selected to form one group can have coded information concerning the same product, with one part of this information being fixed and another part being variable, e.g., the same product name and Internet address with a different expiration date, or the same first part of the Internet address and a variable second part of this address, etc. Such selection of graphic codes having at least partially similar fragments (parts of the code) enables efficient identification of parts common to all graphic codes in the group.

Once the group of graphic codes has been determined in step S101, the method proceeds to step S102 in which the graphic codes in the group are subjected to comparative analysis (an exemplary algorithm will be described in more detail below), as a result of which fixed features identical for all the graphic codes in the group and variable features being different between particular ones of the graphic codes are identified. The identified fixed features can be then arranged, in step S 103 of the method, as a partial pattern in which variable features are removed so that each feature (e.g. particular squares for QR codes or particular bars for barcodes) in this partial pattern is also present in each particular code in the group. In one variation of this step, from the identified fixed features only a subset of the fixed features could be used to form the partial patterns. For example, in this regard, a user may select specific parts of the graphic codes that correspond to specific coded information.

Once the partial pattern has been created in step S 103, the method proceeds to step S104 in which a number of such created identical partial patterns is pre-printed. Each of the pre-printed patterns can be used at a later stage as a base for final completion of graphic codes, as needed. This is done in step S105 of the method in which the remaining identified variable features corresponding to any of the graphic codes (such as remaining bars for barcodes or remaining squares for QR codes) from the group are printed on top of the pre-printed partial patterns in order to obtain a corresponding complete graphic code from the group. In other words, based on the created partial pattern, it is possible to create any particular graphic code from the group by simply adding remaining variable features characteristic for it.

The fixed features forming the partial pattern of the graphic codes, such as 1D or 2D codes, may be printed with the same or a different printer technology than the variable features. Mentioned printer technology can include, e.g., laser printing, continuous inkjet printing (CIJ) or any other print technology suitable for printing graphic codes. The contrast (dark and light fields) provided by print technologies in steps S104 and S105 of the method should be similar or at least without significant differences, so that the machine reading would work well, but the print technology may be different. The essential part of the invention is pre-printing the fixed part of the code, in order to print the variable part of the code faster (more efficiently) in case where the speed of the packaging line is fast, and the printing of a complete code would slow down the speed of the packaging line.

In one approach, one system always marks the static part of the code and another system marks the variable part but in general the main advantage is that the fast-printing system has less load and thus requires less time/resources and the static part of the code can be done slower or more resource-effective as a preparation. The benefit of this approach and method varies between different code types and is dependent on the proportion of the fixed and the variable part. In general, the greater the contribution of the fixed part in the code, i.e. the more code is pre-printed initially (step S104), the less time and effort is needed to print the variable part at the final stage (step S105).

The pre-printing could also be done by the packaging manufacturer as part of the product artwork or the label manufacturer, or it can be done during the packaging process. This would depend on the customer preference, the cost of the packaging, the length of the production batch, etc. In other words, various scenarios are possible and the method according to the present invention encompasses all such configurations. Generally, the pre-printing (step S104) and the post-printing (step S105) may be performed as independent processes implemented in various print technologies and in different locations and in different time.

Below, the method of the present invention is described in more detail with reference to possible implementation for barcodes (as an example of 1D code) and QR codes (as an example of 2D code).

### Example 1: 1D codes

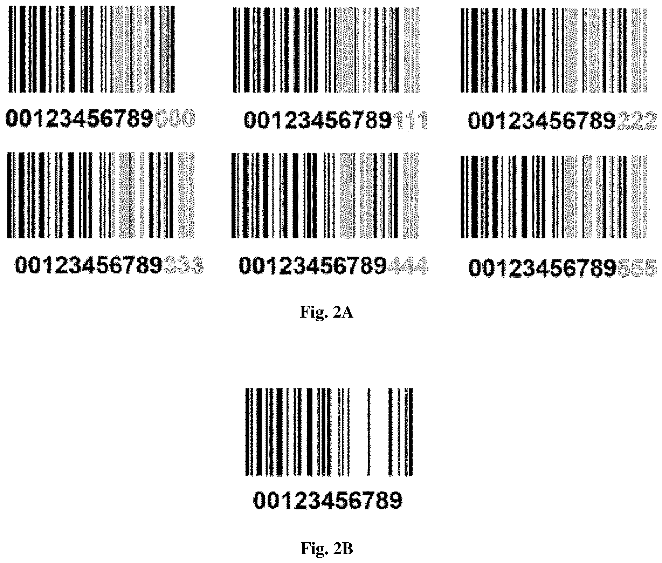

Fig. 2A shows six barcodes which have been generated according to the same standard and have the same length, i.e. each barcode represents a sequence of 14 digits. Therefore, as explained with regard to step S101 of the method, a group of these barcodes is created and a comparative analysis is performed for the group (see step S102). As a result, fixed features in the form of bars common for all the barcodes are identified. These identified fixed bars are present in each barcode of the group and are marked in black in Fig. 2A. On the other hand, variable features (i.e. individual bars characteristic for each barcode in the group) are marked in grey in Fig. 2A. In consequence, as explained with regard to step S103 of the method, a partial pattern is then created based on the fixed features. The partial pattern created in this way is presented in Fig. 2B and can be pre-printed as explained with regard to step S104 of the method. Such partial patterns can be used to provide any one of the barcodes from the group by simply post-printing remaining variable features (bars) specific for a given barcode on top of the printed partial pattern.

In one implementation of the method, the sequences of digits corresponding to particular barcodes and provided below them, as can be seen in Fig. 2A, are considered, in each case, as being part of the code. Therefore, in such configuration, in addition to what has been described above with reference to the barcodes, one part of each digit sequence is identified as a fixed feature for the group and used for creating a partial pattern (i.e. "00123456789" in Fig. 2A and 2B), while the other part, namely the last three digits in the presented example, is different between the codes, and thus is identified as variable features (marked in grey).

### Example 2: 2D codes

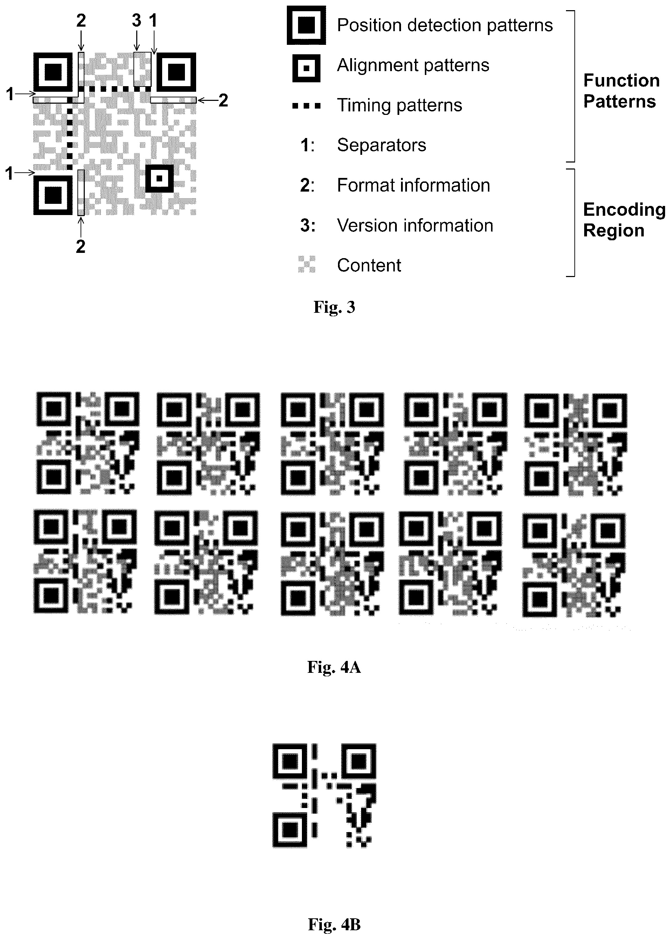

Fig. 3 shows a typical structure of an exemplary QR code. The structure comprises two general portions, wherein one portion corresponds to function patterns, and the other portion corresponds to an encoding region. The function patterns typically include separators, position detection patterns, alignment patterns and timing patterns, as depicted in the figure. The encoding region includes a part corresponding to a content as well as format and version information. Particular purposes or functions of each of the indicated fields under the two main portions are well-known in the art and for the sake of brevity a detailed description is here omitted. It should be noted, however, that the structure presented in Fig. 3 is only exemplary and non-limiting. Depending on the given version or standard of QR codes, there might be more or less patterns, information fields and other types of fields, and/or QR codes may have other sizes. Moreover, instead of dark squares other shapes could also be used, such as dark areas with rounded corners, dots etc. As can be easily understood by a skilled person, some other forms of 2D codes are also possible, as long as the information/data coding pattern (made of any suitable shapes) can be sufficiently distinguished against a contrasting background, including different colors. Furthermore, QR codes may also include some other graphic elements included therein, such as text, logos and other marks (e.g. in the center or corners of QR codes). The present invention is not limited to any such individual form but it rather encompasses any possible graphic code that could be suitably used in the present invention. It is also noted that the grey content squares or pixels are presented in Fig. 3 only for ease of description, while in the real QR codes all squares or pixels have the same color and contrast.

A group of different QR codes generated according to the same standard, i.e. having the same structure, such as the one presented in Fig. 3, and having the same size will therefore include, at least partially, some common features which are present in all the QR codes. These common features may include the mentioned function patterns including position detection patterns, alignment patterns and timing patterns (which may form obligatory parts of each QR code in a given standard) as well as at least some portions of the encoding region, especially when at least part of the coded data is identical for all the generated QR codes. Once identified, these common features may be used in the method according to the present invention, as explained below in more detail.

The inventors have found that taking into the account the above observations, i.e. that in a group of graphic codes, such as 1D or 2D codes, there are fixed parts of the graphic codes, always present in the code, without the dependency on the content (or being part of the content itself in specific scenarios, as will be explained further below), the method according to the present invention could be accordingly used to print graphic codes much faster. The method, as explained with reference to Fig. 1, is based on pre-printing the fixed patterns of the code as a standard part of, e.g., the product (or label) artwork in the process of printing the product information and artwork. An example of fixed patterns comprising fixed features in a group of different QR codes is shown in Fig 4A.

In Fig. 4A a group of ten different QR codes is presented, wherein each QR code has the same size and has been generated according to the same standard, which means that the structure of each code includes the same types of function patterns and encoding region, as explained with reference to Fig. 3. For the sake of clarity and for the illustrative purposes, the presented codes are simplified to illustrate the idea of the invention, however, actual QR codes could be much more complex. As it can be seen in this example, the method steps according to the present invention have been carried out as explained with reference to Fig. 1 and, as a result of which, the QR codes have been compared to each other and fixed parts (black pixels) as well as varying content (grey pixels being different between the QR codes) have been identified and indicated. The method according to the present invention provides two general stages, wherein in the first stage (see steps S101 - S104 of the present method) fixed features or parts (black pixels) are identified and pre-printed and form an initial pattern (as shown in Fig. 4B) that is to be used in the second stage of the method (step S105 of the method). This second stage includes additional printing (or post-printing) of those parts of the QR codes which correspond to the varying features or parts of the content (identified grey pixels for particular QR codes from the group) and is performed on top of the pre-printed patterns.

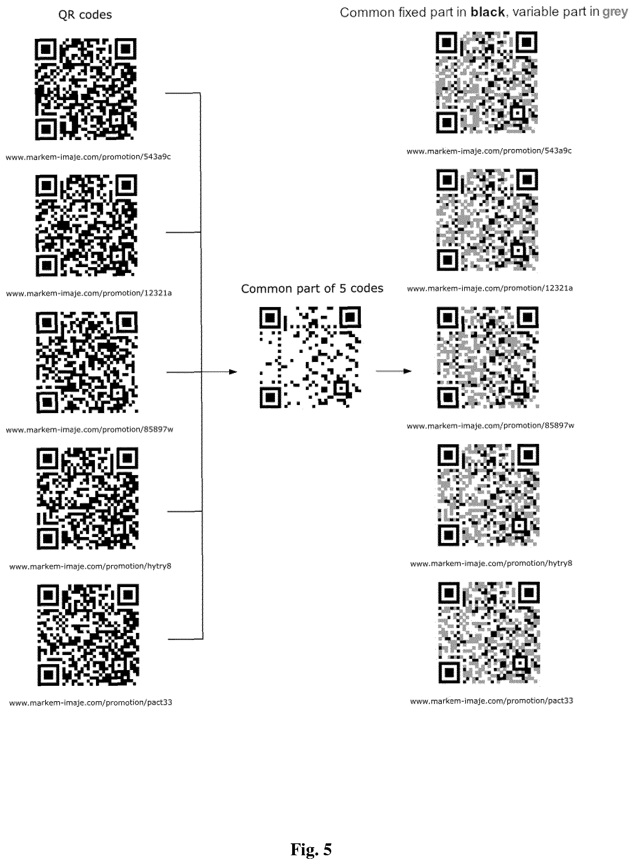

Fig. 5 shows an exemplary group of five QR codes of the same type and size (left side of the figure). As a consequence of generating QR codes in the same standard, all the QR codes have identical functional patterns (as explained above with regard to Fig. 3). Moreover, the content of each QR code included in the corresponding encoding region corresponds to a URL (web address) indicated below each code. As can be easily seen in the figure, the initial portion of the address (i.e., www.markem-imaje.com/promotion/) is identical for all the QR codes, and therefore the corresponding parts of the encoding regions are also identical. For the group of these five QR codes, the method according to the present invention has been carried out, as explained with reference to Fig. 1. As a result, fixed features of all the QR codes have been identified and a partial pattern comprising common parts has been created, as presented in the center of Fig. 5, wherein the fixed features are part of both function patterns and encoding region (i.e. content). This partial pattern can be then pre-printed (see step S104 of the method). Once the partial pattern is pre-printed, it can be used to provide any one of the QR codes from the group by post-printing the remaining variable features on top of it (see step S105 of the method). As can be seen on the right side of Fig. 5, the pre-printed common fixed part including identified fixed features (marked in black) and the corresponding variable parts (marked in grey) (identified in step S102) post-printed on the partial pattern form together corresponding QR codes. It will be apparent for those skilled in the art that the fixed features can be selected from fixed features of function patterns and/or fixed features of encoding region, or as any other fixed features not explicitly mentioned here, as needed by the user, as long as theses fixed features or parts are present in every QR code from the group.

Although not shown in the figures, the method of the present invention could be correspondingly used with other forms or variations of 2D codes which can represent a combination of QR code and additional elements including logos, marks, text and similar elements integrated therein (all of which are herein collectively referred to as "graphic codes"). For example, a logo can be provided in the center of a QR codes and some parts (e.g. at the corners) can have different colors than the rest of a given QR code. Such additional elements can be correspondingly recognized in step S 102 of the method presented in Fig. 1 either as fixed or variable features. For example, a logo included in the same form in the center of each graphic code of the group will be identified as a fixed feature. As a further example, text included in the same position and having the same format in each graphic code of the group can be correspondingly identified as a fixed part (in case it is identical for all the codes of the group), as a variable part (in case it is different for all the codes of the group) or one part of the text can be fixed, and the other can be variable (e.g. in case where a date is presented and only some portions are changing, such as days and months, while the other are fixed, such as a year). While only some examples have been presented, it will be obvious that the same rules may be followed with regard to any other graphical element(s) added to or incorporated into graphic codes and fixed and/or variable parts can be suitably identified based thereon.

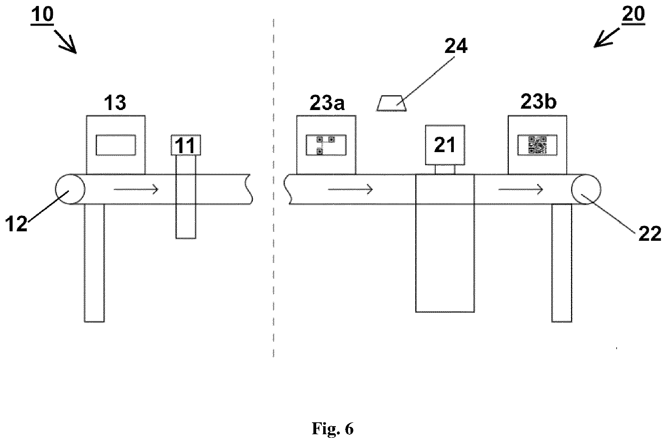

Fig. 6 shows a schematic diagram of a printing system adapted for carrying out the method according to the present invention. The system presented in Fig. 6 is shown in a two-part form, wherein the first part on the left side of the figure denoted generally by reference number 10 corresponds to pre-printing of partial graphic codes, whereas the second part on the right side of the figure denoted generally by reference number 20 and separated by a dashed line corresponds to post-printing of graphic codes. In the following description, the corresponding parts will be referred to as a pre-printing system 10 and a post-printing system 20, respectively.

The pre-printing system 10 comprises a fixed part printer 11 and a conveyor 12 for transporting one or more products 13 to be pre-printed with partial graphic codes. Before pre-printing is started, steps S101-S103 of the method presented in Fig. 1 are performed and the resulting partial pattern comprising the identified fixed features is transferred or loaded to the fixed part printer 11. Thereafter, products 13 to be pre-printed are transported on the conveyor 12 in the direction indicated by the arrow and are pre-printed (step S104) with the determined partial pattern by the printer 11 when they reach a predetermined position with reference thereto.

The post-printing system 20 comprises a variable part printer 21, a conveyor 22 for transporting one or more products 23a to be post-printed with predetermined variable features or parts on top of the partial patterns previously printed on the products by the pre-printing system 10, and a product positon sensor 24. As the product 23a is transported on the conveyor 22 in the direction indicated by the arrow, its position is detected by the sensor 24, e.g. using special marks provided in predetermined locations on product as a reference, and corresponding information is communicated to the printer 21 in order to allow printing of remaining (variable) features or parts of graphic codes on top of the pre-printed product in a precise and aligned manner. As a result of combining the fixed and variable features, a complete graphic code from the group is created to form the final product 23b. More details regarding aligning techniques using different sensor configurations are also provided further below in this specification.

Fixed and variable features can be identified (step S102) and used for creating a partial pattern (step S103) and provided for pre-printing (step S104) and post-printing (step S105) by means of any suitable processing device (not shown) capable of identifying mentioned fixed and variable features based on a determined group of graphic codes provided by a user (step S101). Such a processing device may be, e.g., a computer running a specially designed program code (an exemplary algorithm is also described further below in this specification) communicatively connected to the printers 11 and/or 21, e.g. by means of a wired or wireless connection, or may be integrated into the printers 11 and/or 21 or provided in some other configuration such that it allows the printer 11 and/or 21 to print determined fixed and/or variable features or parts of graphic codes.

As can be easily understood by a skilled person, although presented side-by-side in Fig. 6, the pre-printing system 10 and the post-printing system 20 are not necessarily parts of the same physical system. In other words, the pre-printing and the post-printing can be performed in different locations and time and using different print techniques. It is also possible that printers 11 and 21 are provided as one and the same device such that in the pre-printing phase it is used for printing partial patterns, and after that, when necessary, it is used again in combination with the sensor 24 for post-printing the remaining variable features or parts.

Although the sensor 24 presented in Fig. 6 is illustrated as a single sensor, it also possible to use other types of configurations of sensing devices, such as two or more sensors, a set of fast array of sensors, a camera, etc. Any sensing technology (capacitive, optic/photocell, magnetic, etc.) can be used for this purpose.

Pre-printing of the portion of the code in the form of a partial pattern as explained above, enables to lower the content needed for later post-printing using any print technology (such as, e.g., laser printing or CIJ printing). The printer of the post-printing system 20 would only have to print the portion of the code that is variable (i.e. changes between individual codes), to code the variable message included in the code. By lowering the number of points printed by the printer, the efficiency of printing is significantly increased, by 30% to 40%.

In order to provide a comprehensive understanding of the present invention, below a more detailed use scenario is presented.

Following the method of the present invention requires a customer or user to have the knowledge about the fixed part (i.e. a set of fixed features forming a partial pattern) for a group of codes. This knowledge may be provided by using an exemplary algorithm explained below.

The above-mentioned algorithm applies to many 1D and 2D codes, wherein some of the examples or specific details provided here correspond to QR code only as an example, and should be construed as non-limiting the scope of the present invention.

In the presented scenario, the fixed part of the codes is generated by the algorithm owned by a service provider. The algorithm is used by the service provider in-house (the customer sends the data to the service provider and the service provider sends back the information about the fixed part of the codes) or on-line (SAAS) the customer logs into the online software tool (using the embedded algorithm) to generate the fixed part of the codes. This algorithm can also be implemented into the service provider software packages as a part of the software (for example CoLOS software by Markem-Imaje), printer control software or other software package selected by the service provider. The information about the fixed part of the codes to be pre-printed is delivered to the customer as an image or other description, allowing the customer to pre-print the fixed part of the codes.

Algorithm operation steps:
1. The algorithm gets the information about the type of content needed by the customer and the variation of the content planned by the customer which is sent to the service provider or entered in the online tool. Based on the information entered (provided) by the customer, the algorithm generates all possible 1D or 2D codes and determines the common part and the variable part of the code. Based on this, it provides information about the fixed part of the codes to the customer.
2. The algorithm may use optimization technique, in order to optimize the calculation without generation of all possible variants of the code in order to provide semi-optimized or optimized version of the fixed part of the code.
3. As one of the optimization techniques, the software may force a specific type of mask pattern for QR code to maximize the fixed part of the code and to minimize the variable part (acting similar to a compression method). Similar techniques may be used for other code types.
4. As an option, in the simplest case, the algorithm only provides the fixed part of the code with no consideration of the variability in the content provided by the customer. This is based on the type of code and the code standard specification.

One possible algorithm that can be used for identifying fixed/variable features of QR codes in step S 102 of the method presented in Fig. 1 and in the examples presented above, is disclosed below.
1. Based on the given maximum message length and type of used characters (message requirements provided by the customer) calculate the necessary cell size of QR code to fit all the possible message combinations.
2. Based on code type and data, generate fixed code parts (i.e. fixed finder pattern, timing pattern, separators, etc.).
3. Set initial generation parameters based on additional code constrains (code mask, etc.).
4. Generate or read first of all possible variable combinations of the QR code content.
5. Generate a first graphic code - QR code in this example, using the first string and save it as a reference.
6. Generate or read next possible content string and create corresponding graphic code (QR code).
7. Compare created graphic code (QR code) cell by cell on the possible variable cells to the reference graphical code.
   a) If cell value for both codes = -1 (for both compared codes the cells are black), save the value of the reference matrix as -1.
   b) If cell value for both codes = 1 (for both compared codes the cells are white), save the value of the reference matrix as 1.
   c) If the cell value is different for the compared codes (for one code the cell is black, for the other code the cell is white), save the value of the reference matrix as 0.
8. Repeat the steps 5 to 7 until one of the two conditions below is met:
   a) all the possible combinations of signs were used up
   b) all the cells used for data encoding have been checked to have a different values, therefore there is no common part in the segment of code responsible for the data.
9. The resulting reference QR code matrix will be the template that e.g. could be send to the product manufacturer to be pre-printed on a product.

Further to the above, with regard to step S105 of the method according to the present invention as well as to the printing system presented in Fig. 6, below a method for recognizing the existing pre-printed pattern of 1D, 2D code in order to correctly position the additional part of the 1D, 2D code printer by a laser (or other printing technology like CIJ, SPI) to form a readable, complete code is provided. A static printing approach and a dynamic printing approach are presented.

For fast moving products on a conveyor belt, the invention considers target recognition by a set of fast array of sensors. A first sensor detects the edge of the product to be marked. A second sensor detects a first mark specially printed on the product, to indicate, that the beginning of the pre-printed code is in a defined distance, thus allowing to start the printing in the correct time. A third sensor detects a second mark specially printed on the product, to indicate the speed of the movement (calculated based on the time between the detection of the first mark and the second mark), to allow correct printing for variable speeds. The third sensor may not be needed, if precise speed information is obtained from an encoder or from the information provided by the first sensor and the second sensor. This approach uses simple and fast sensors, which would provide faster response than a camera with image recognition. The use of fast sensors is preferred for fast moving applications.

For stationary applications, where the target pre-printed code is not moving, a camera may be used to recognize the pre-printed pattern and trigger the printing of a variable portion of the graphic code aligned to the recognized pre-printed pattern. If needed, the camera provides information about the angular position of the code and the laser printer (or any other suitable type of printer) aligns the code to match the tilt of the pre-printed portion of the code. If the speed of movement is low, camera can also be used for applications with moving targets, depending on the movement speed and the speed of the camera operation.

In case of repeatable product positioning in the packaging line, it might be possible to use just normal start/stop system if the positioning of the pre-printed portion of the code is precise enough. Such start/stop system could be based on various sensing technology (capacitive, optic/photocell, magnetic, etc.). The sensors would be used in the same way as a point detector only, the selection of the individual sensor would depend on the specification of product and surface where the code is printed and the type of sensor best suitable to perform the detection.

It will be understood by an ordinary skilled person that, although the embodiments and examples presented herein relate to specific barcodes or QR codes having a predetermined size, structure and generated in accordance with a specified standard, the present invention is not limited to the presented embodiments or examples and the scope of the invention is defined by the attached claims. In other words, the inventive method can be also used with other types of 1D and 2D graphic codes and with other printing technologies used for pre-printing and post-printing (CIJ, TTO, etc.).

## Claims

1. A method of fast printing graphic codes, the method comprising:
- determining (S101) a group of two or more different graphic codes of the same type;
- identifying (S102) fixed features being identical for all the graphic codes in the group and variable features being different between particular ones of the graphic codes;
- creating (S103) a partial pattern comprising the identified fixed features identical for all the graphic codes from the group;
- pre-printing (S104) the created partial patterns on a product;
- printing (S105) the remaining identified variable features corresponding to any of the graphic codes from the group on top of the pre-printed partial patterns in order to obtain a corresponding complete graphic code from the group.

2. The method according to claim 1, wherein the graphic codes are selected from one-dimensional (1D) codes or two-dimensional (2D) codes.

3. The method according to claim 1 or 2, wherein the graphic codes are barcodes.

4. The method according to claim 3, wherein each barcode in the group include a sequence of digits.

5. The method according to claim 1 or 2, wherein the graphic codes are QR codes.

6. The method according to claim 5, wherein each QR code in the group comprises one or more additional elements selected from: a logo, a numeric code, a character code, an alphanumeric code, a graphical element.

7. The method according to any one of the preceding claims, wherein the graphic codes are created using any colors against a contrasting background.

8. The method according to any one of claims 5 to 7, wherein the identified fixed features of QR codes are selected from a group comprising portions of function patterns and/or portions of an encoding region.

9. The method according to claim 8, wherein the function patterns include one or more of position detection patterns, alignment patterns, timing patterns and the encoding region includes one or more of format information, version information and content field.

10. The method according to any one of the preceding claims, wherein the printing is performed using a laser printer and/or CIJ printer.

11. The method according to any one of the preceding claims, wherein the partial pattern is created in step (S103) using a selected subset of the identified fixed features.

12. The method according to any one of the preceding claims, wherein the printing the remaining identified variable features in step (S105) is performed dynamically using a first sensor detecting an edge of a moving product containing the pre-printed graphic code, and a second sensor detecting a first mark specially printed in a predetermined location on the product to indicate that the beginning of the pre-printed code is in a defined distance, thus allowing to start the printing in the correct time and to ensure proper alignment of the variable features with the fixed features on the product.

13. The method according to claim 12, wherein the printing the remaining identified variable features in step (S105) is furthermore performed using a third sensor detecting a second mark specially printed in a predetermined location on the product, to indicate, based on the time difference between the detection of the first mark and the second mark, the speed of the movement of the product containing the pre-printed graphic code, allowing correct printing for variable speeds.

14. The method according to any one of claims 1-11, wherein the printing the remaining identified variable features in step (S105) is performed statically using a camera for recognizing the pre-printed pattern and triggering the printing of variable features to ensure proper alignment of the variable features with the fixed features on the product.

15. A printing system (10, 20) for carrying out the method as defined in any one of claims 1-14, wherein the printing system comprises:
- a processing device for identifying fixed and variable features for a group of input graphic codes;
- a conveyor (12, 22) for transporting products (12, 23a) which are to be subjected to printing;
- at least one printer (11, 21) adapted to print the identified fixed and/or variable features identified by the processing device on the products (12, 23a) transported by the conveyor (12, 21);
- at least one sensor (24) positioned before the printer (11, 21) in the direction of the conveyor motion and configured to detect positions and/or speed of the transported products (23a) and to communicate the same to the printer (12, 22) to ensure proper alignment of the fixed and variable features on the products (23a).

16. A computer readable medium comprising computer program instructions which, when executed by a processing device, cause the processing device to carry out the steps (S102, S103) of the method according to claim 1.
